# EUROPEAN PATENT SPECIFICATION

(11) **EP 4 122 083 B1**
(45) Date of publication and mention of the grant of the patent: **31.01.2024**
(21) Application number: 21714323.9
(22) Date of filing: 02.03.2021
(51) Int. Cl.: F04B 53/16, H02K 7/116, F04B 17/03, F04B 1/20, H02K 7/14

(54) **AN ELECTROHYDRAULIC DEVICE**
ELEKTROHYDRAULISCHE VORRICHTUNG
DISPOSITIF ÉLECTROHYDRAULIQUE

(30) Priority: 18.03.2020 FI 20205275
(43) Date of publication of application: 25.01.2023
(73) Proprietor: Lappeenrannan-Lahden teknillinen yliopisto LUT, 53851 Lappeenranta (FI)
(72) Inventor: PYRHÖNEN, Juha, 53851 Lappeenranta (FI); SCHERMAN, Eero, 53851 Lappeenranta (FI)
(74) Representative: Väänänen, Janne Kalervo
(86) International application number: PCT/FI2021/050152
(87) International publication number: WO 2021/186101

(56) References cited:
- EP-A1- 2 796 212
- EP-A2- 1 384 529
- WO-A1-2018/136960
- DE-A1-102005 009 311
- DE-A1-102007 006 284
- DE-U1- 29 604 364

## Description

### Field of the disclosure

The disclosure relates to an electrohydraulic device that is a combination of a hydraulic device, a gear, and an electric machine. The hydraulic device can act as a hydraulic pump and/or as a hydraulic motor.

### Background

In many hydraulic systems, an electrohydraulic device which comprises a hydraulic pump that is driven with an electric machine can be more advantageous than a hydraulic pump that is driven with e.g. a combustion engine because an electrohydraulic device of the kind mentioned above can be easier and faster to control. Furthermore, the electrohydraulic device can be positioned more freely than a hydraulic pump driven by a combustion engine.

In some hydraulic systems there can be a need for an electrohydraulic device which is compact in size but where a hydraulic pump can nevertheless be driven with high torque. Maximum torque that can be produced by an electric machine is limited by physical dimensions of the rotor of the electric machine because magnetic flux density acting on an airgap of the electric machine is limited as well as electric current carried by windings of the electric machine is limited. The magnetic flux density cannot be practically increased any more when a saturation point of iron has been exceeded. Increasing the electric current increases resistive losses in the windings. The resistive losses are increased proportionally to the square of the electric current whereas the torque is increased proportionally to the electric current when the magnetic flux density does not change. Thus, increasing the electric current over a reasonable point impairs the efficiency. Furthermore, increasing the electric current makes it more and more challenging to remove heat caused by the resistive losses. Therefore, in many electrohydraulic devices, a physical size of an electric machine needs to be significantly greater than the physical size of a hydraulic pump and therefore it can be challenging to construct an electrohydraulic device that is compact in size but where a hydraulic pump can nevertheless be driven with high torque.

Publication US4850812 describes an integrated motor-pump unit for use as a hydraulic fluid pressure source. The integrated motor-pump unit comprises a pump rotor affixed in the center of a motor rotor. The motor-pump rotor assembly spins on a stationary shaft and is supported by radial and axial bearings. The stationary shaft comprises a piston drive mechanism which is angled, relative to the geometric axis of rotation of the motor-pump rotor assembly, so that reciprocal movement of the pistons is developed as they rotate about the geometric axis of rotation. In the integrated motor pump unit described in US4850812, the physical size of the electric machine is significantly greater than the physical size of a hydraulic pump that is inside the electric machine.

Publication WO2018136960A1 describes a variator that comprises a planetary gear set that has at least three nodes. The variator comprises a pumping unit connected to a first node of the planetary gear set. The variator comprises a clutch connected to a second node of the planetary gear set. The clutch is selectively movable between three positions. When in a first position, the clutch allows the second node to freewheel. When in a second position, the clutch connects the second node to a fixed surface. When in a third position, the clutch connects the second node to an electric motor. The variator comprises a receiver connected to the third node of the planetary gear set. The receiver is configured to receive a drive shaft.

Publication EP2796212A1 describes a drive device for a high-pressure cleaning unit having a motor whose shaft is coupled via a planetary gear to a swash plate. The planetary gear has a sun gear connected to the motor shaft. The sun gear meshes with planet wheels which are mounted to be able to rotate on a planet carrier and engage with an internally toothed gear ring. The planet wheels are slidably placed against a support element with their end faces remote from the planet carrier. To construct the drive device in such a manner that it has an improved service life, the support element has a wear-inhibiting contact area for the planet wheels.

Publication DE102005009311A1 describes a cleaning appliance with a motor-pump unit that comprises a pump head having a piston subassembly, a drive motor, and a planetary gear. The piston subassembly has a plurality of pistons which can be moved back and forth in the longitudinal direction of the motor-pump unit, and each can penetrate to a pumping chamber of the pump head. A swash-plate unit interacts with the pistons, and the planetary gear has a sun gear which is connected to the motor shaft of the drive motor and is coupled to a gear ring via a plurality of planet wheels rotatably mounted on a planet carrier. The planet carrier is connected in a rotationally fixed manner to the swash-plate unit. The piston subassembly has an oil sump into which penetrates an oil-delivery tube which is aligned coaxially with the motor shaft and is connected to the planet carrier. Oil is fed to the planetary gear from the oil sump via the oil-delivery tube.

Publication DE29604364U1 describes a cleaning device comprising a piston pump driven by a motor via a planetary gear and a swash plate. The planetary gear comprises a sun gear which is connected to a motor shaft, and at least one planet wheel which meshes with the sun gear, and which is supported on a support shaft which is connected to the swash plate via a support member that is integrally connected to the support shaft.

Publication EP1384529A2 describes a device for varying delivery pressure of a jet washer that comprises a positive-displacement pump having a delivery nozzle of predetermined cross-section and operated by a single-phase electric motor powered by alternating current. The device comprises electronic means for controlling and regulating a motor feed voltage to vary rotational speed of the motor.

Publication DE102007006284A1 describes a pump unit that comprises a drive motor coupled to a piston pump via a planetary gear. The planetary gear has a sun gear, planet wheels, and a gear ring, which are arranged in a housing. The gear ring is held in the housing in a twist-proof manner by means of interlocking form-fitting elements of the housing and of the gear ring.

### Summary

The following presents a simplified summary in order to provide a basic understanding of some aspects of various invention embodiments. The summary is not an extensive overview of the invention. It is neither intended to identify key or critical elements of the invention nor to delineate the scope of the invention. The following summary merely presents some concepts of the invention in a simplified form as a prelude to a more detailed description of exemplifying embodiments of the invention.

In this document, the word "geometric" when used as a prefix means a geometric concept that is not necessarily a part of any physical object. The geometric concept can be for example a geometric point, a straight or curved geometric line, a geometric plane, a non-planar geometric surface, a geometric space, or any other geometric entity that is zero, one, two, or three dimensional.

In accordance with the present invention, there is provided a new electrohydraulic device that can be used as a hydraulic fluid pressure source, or as a hydraulically driven electric generator. An electrohydraulic device according to the invention comprises:
- an electric machine,
- a hydraulic device that can act as a hydraulic pump and/or as a hydraulic motor, and
- a gear having a first shaft attached to a rotor of the electric machine, a second shaft configured to drive the hydraulic device, and gear wheels configured to transfer torque between the first shaft and the second shaft.

The gear is a planetary gear having a gear ring, a sun wheel, planet wheels configured to mesh with the gear ring and the sun wheel, and a planet carrier configured to support the planet wheels, the planet carrier being connected to the second shaft of the gear and the sun wheel being connected to the first shaft of the gear. The electric machine is an outer rotor electric machine, and the gear ring of the planetary gear is attached to a stator of the outer rotor electric machine so that the stator surrounds the gear ring.

The second shaft of the gear is configured to constitute a rotating part of the hydraulic device. The second shaft that comprises the rotating part of the hydraulic device can be for example a single piece of material, or the second shaft can be manufactured as separate pieces which are attached to each other with a shrink fit, a welded joint, a brazed joint, a bolted joint, or some other suitable attachment technique. Thus, in electrohydraulic devices according to some exemplifying embodiments, the rotating part of the hydraulic device is non-separable from the other part of the second shaft without material deformations whereas, in electrohydraulic devices according to other exemplifying embodiments, the drive flange is separable from the other part of the second shaft without material deformations.

In this document, the term "hydraulic device" means a device that can act as a hydraulic pump and/or as a hydraulic motor.

As the gear and the hydraulic device are integrated so that the rotating part of the hydraulic device is also a part of the second shaft of the gear, the electrohydraulic device can be compact even if it comprises the gear between the electric machine and the hydraulic device. The compactness of the electrohydraulic device makes it easier for example to encapsulate the electrohydraulic device with a hermetic casing.

The hydraulic device can be for example bent axis hydraulic pump, and the second shaft of the gear can be configured to constitute a drive flange configured to drive pistons of the bent axis hydraulic pump. For another example, the hydraulic device can be a swash plate axial piston pump, and the second shaft of the gear can be configured to constitute a shaft of a rotating cylinder barrel of the swash plate axial piston pump. It is also possible that the hydraulic device is some other type of hydraulic pump and/or motor.

The gear can be e.g. a speed reduction gear so that rotational speed of the electric machine is greater than rotational speed of the hydraulic device. In this exemplifying case, torque directed to the hydraulic device is greater than torque produced by the electric machine and thus the physical size of the electric machine can be smaller.

Various exemplifying and non-limiting embodiments are described in accompanied dependent claims.

Various exemplifying and non-limiting embodiments both as to constructions and to methods of operation, together with additional objects and advantages thereof, will be best understood from the following description of specific exemplifying embodiments when read in conjunction with the accompanying drawings.

The verbs "to comprise" and "to include" are used in this document as open limitations that neither exclude nor require the existence of also un-recited features. The features recited in the accompanied dependent claims are mutually freely combinable unless otherwise explicitly stated. Furthermore, it is to be understood that the use of "a" or "an", i.e. a singular form, throughout this document does not exclude a plurality.

### Brief description of the figures

Exemplifying and non-limiting embodiments and their advantages are explained in greater detail below in the sense of examples and with reference to the accompanying drawings, in which:
figure 1 illustrates an electrohydraulic device according to an exemplifying and non-limiting embodiment,
figure 2 illustrates an electrohydraulic device according to another exemplifying and non-limiting embodiment, and
figure 3 illustrates an electrohydraulic device according to another exemplifying and non-limiting embodiment.

### Description of exemplifying and non-limiting embodiments

The specific examples provided in the description below should not be construed as limiting the scope and/or the applicability of the accompanied claims. Lists and groups of examples provided in the description are not exhaustive unless otherwise explicitly stated.

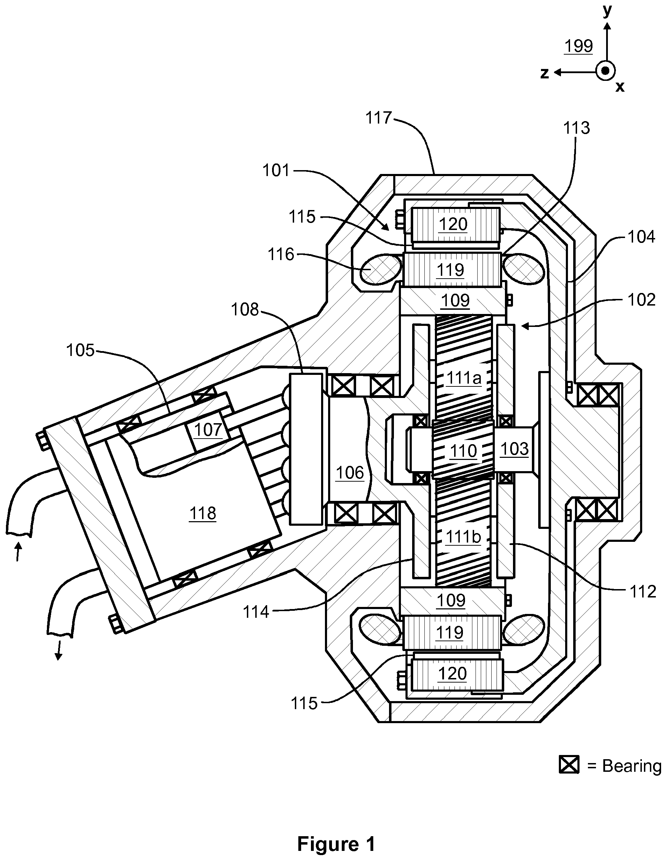

Figure 1 shows a section view of an electrohydraulic device according to an exemplifying and non-limiting embodiment. The section is taken along a geometric section plane which is parallel with the yz-plane of a coordinate system 199. The electrohydraulic device comprises an electric machine 101, a gear 102, and a hydraulic device 105. In this exemplifying case, the hydraulic device 105 is a bent axis hydraulic pump. The gear 102 comprises a first shaft 103 attached to a rotor 104 of the electric machine 101, a second shaft 106 configured to drive the hydraulic device 105, and gear wheels configured to transfer torque between the first shaft 103 and the second shaft 106. The second shaft 106 of the gear 102 is configured to constitute a drive flange 108 configured to drive pistons of the hydraulic device 105. In figure 1, a cylinder barrel 118 of the hydraulic device 105 is presented as a partial section view and one of the pistons of the hydraulic device 105 is denoted with a reference 107. The second shaft 106 that comprises the drive flange 108 can be for example a single piece of material. It is also possible that the second shaft 106 is manufactured as separate pieces which are attached to each other with a shrink fit, a welded joint, a brazed joint, a bolted joint, or some other suitable attachment technique.

In the exemplifying electrohydraulic device illustrated in figure 1, the gear 102 is a speed reduction planetary gear so that the rotational speed of the electric machine 101 is greater than the rotational speed of the hydraulic device 105. The planetary gear comprises a gear ring 109, a sun wheel 110, planet wheels configured to mesh with the gear ring and the sun wheel, and a planet carrier 112 configured to support the planet wheels. The planet carrier 112 is connected to the second shaft 106 of the gear, and the sun wheel 110 is connected to the first shaft 103 of the gear. In figure 1, two of the planet wheels are denoted with references 111a and 111b. An end-plate 114 of the planet carrier 112 and the second shaft 106 comprising the drive flange 108 may constitute for example a single piece of material. It is also possible that the element comprising the end-plate 114 and the second shaft 106 is manufactured as separate pieces which are attached to each other with one or more shrink fits, one or more welded joints, one or more brazed joints, one or more bolted joints, or some other suitable attachment technique.

In the exemplifying electrohydraulic device illustrated in figure 1, the electric machine 101 is an outer rotor electric machine, and the gear ring 109 of the planetary gear is attached to a stator 113 of the outer rotor electric machine so that the stator 113 surrounds the gear ring 109. In this exemplifying case, the outer rotor electric machine is a permanent magnet machine whose rotor 104 comprises permanent magnets. In figure 1, two of the permanent magnets are denoted with a reference 115. It is also possible that the outer rotor electric machine is an induction machine, an electrically excited synchronous machine, a reluctance machine, a switched reluctance machine, a flux switching machine, or some other kind of electric machine. In the exemplifying electrohydraulic device illustrated in figure 1, the rotor 104 comprises a rotor core structure 120 made of electrically insulated ferromagnetic sheets stacked in the axial direction of the outer rotor electric machine, i.e. in the z-direction of the coordinate system 199. As another exemplifying alternative, the rotor core structure may comprise ferrite or iron powder composites such as e.g. Soft Magnetic Composite SOMALOY^{®}. The outer rotor electric machine is mechanically advantageous because the centrifugal force presses the rotor surface mounted permanent magnets against the rotor core structure 120 whereas in an inner rotor electric machine the centrifugal force tends to disengage surface mounted permanent magnets from a rotor core structure.

In the exemplifying electrohydraulic device illustrated in figure 1, the stator 113 of the outer rotor electric machine comprises a stator core structure 119 constituted by a stack of electrically insulated ferromagnetic sheets stacked on each other in the axial direction of the outer rotor electric machine, i.e. in the z-direction of the coordinate system 199. As another exemplifying alternative, the stator core structure may comprise ferrite or iron powder composites such as e.g. Soft Magnetic Composite SOMALOY^{®}. The stator 113 comprises stator windings whose coil sides are located in stator slots between stator teeth of the stator core structure 119. The stator windings can be configured to constitute a multiphase winding for producing a rotating magnetic field when supplied with multiphase alternating electric currents. The multiphase winding can be e.g. a three-phase winding. In figure 1, a section view of an end-winding of the stator windings is denoted with a reference 116. The coil sides of the stator windings are not shown. The stator slots can be parallel with the axial direction of the outer rotor electric machine i.e. parallel with the z-axis of the coordinate system 199. It is however also possible that the stator 113 has skewed stator slots.

The exemplifying electrohydraulic device illustrated in figure 1 comprises a casing 117 configured to contain the electric machine 101, the gear 102, and the hydraulic device 105. The casing 117 is advantageously a hermetic casing.

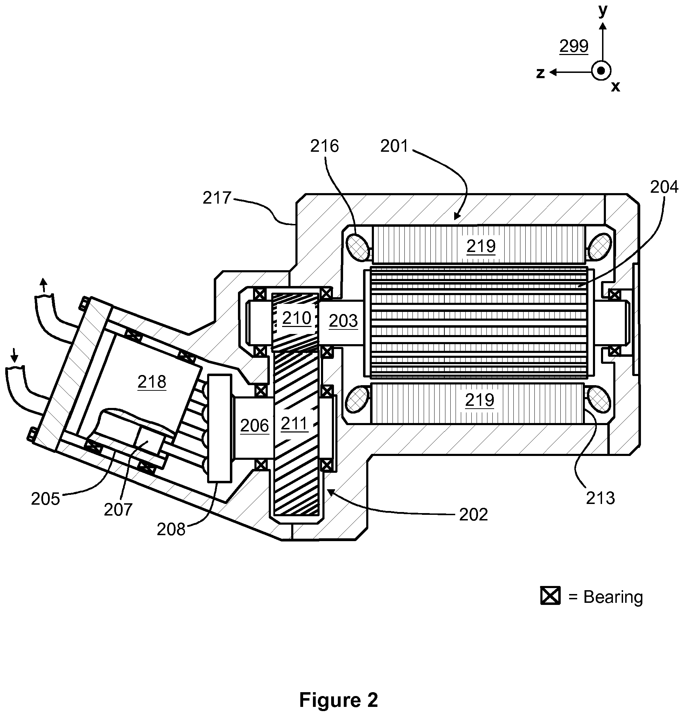

Figure 2 shows a section view of an electrohydraulic device according to an exemplifying and non-limiting embodiment. The section is taken along a geometric section plane which is parallel with the yz-plane of a coordinate system 299. The electrohydraulic device comprises an electric machine 201, a gear 202, and a hydraulic device 205. In this exemplifying case, the hydraulic device 205 is a bent axis hydraulic pump. The gear 202 comprises a first shaft 203 attached to a rotor 204 of the electric machine 201, a second shaft 206 configured to drive the hydraulic device 205, and gear wheels configured to transfer torque between the first shaft 203 and the second shaft 206. The second shaft 206 of the gear 202 is configured to constitute a drive flange 208 configured to drive pistons of the hydraulic device 205. In figure 2, a cylinder barrel 218 of the hydraulic device 205 is presented as a partial section view and one of the pistons of the hydraulic device 205 is denoted with a reference 207. The second shaft 206 that comprises the drive flange 208 can be for example a single piece of material.

In the exemplifying electrohydraulic device illustrated in figure 2, the gear 202 is a spur gear that comprises a first gear wheel 210 driven by the rotor 204 of the electric machine 201 and a second gear wheel 211 meshing with the first gear wheel 210 and configured to drive the hydraulic device 205.

In the exemplifying electrohydraulic device illustrated in figure 2, the electric machine 201 is an inner rotor induction machine whose rotor 204 comprises a cage winding. In this exemplifying case, the rotor 204 comprises a rotor core structure made of electrically insulated ferromagnetic sheets stacked in the axial direction of the electric machine 201, i.e. in the z-direction of the coordinate system 299. A stator 213 of the electric machine 201 comprises a stator core structure 219 constituted by a stack of electrically insulated ferromagnetic sheets stacked on each other in the axial direction of the electric machine. The stator 213 comprises stator windings whose coil sides are located in stator slots between stator teeth of the stator core structure. The stator windings can be configured to constitute a multiphase winding for producing a rotating magnetic field when supplied with multiphase alternating electric currents. The multiphase winding can be e.g. a three-phase winding. In figure 2, a section view of an end-winding of the stator windings is denoted with a reference 216. The coil sides of the stator windings are not shown. The stator slots can be parallel with the axial direction of the electric machine 201. It is however also possible that the stator 213 has skewed stator slots.

The exemplifying electrohydraulic device illustrated in figure 2 comprises a casing 217 configured to contain the electric machine 201, the gear 202, and the hydraulic device 205. The casing 217 is advantageously a hermetic casing.

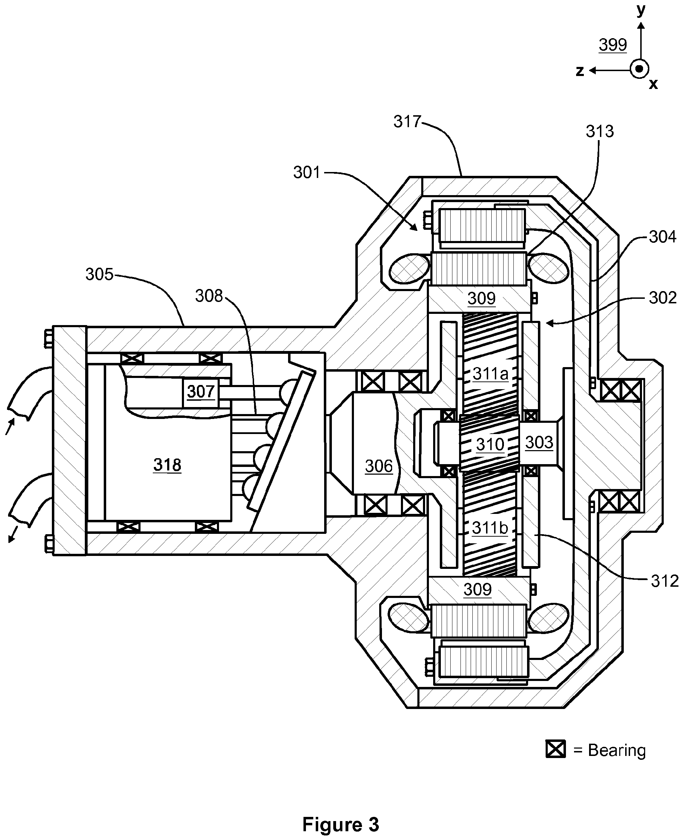

Figure 3 shows a section view of an electrohydraulic device according to an exemplifying and non-limiting embodiment. The section is taken along a geometric section plane which is parallel with the yz-plane of a coordinate system 399. The electrohydraulic device comprises an electric machine 301, a gear 302, and a hydraulic device 305. In this exemplifying case, the hydraulic device 105 is a swash plate axial piston pump. The gear 302 comprises a first shaft 303 attached to a rotor 304 of the electric machine 301, a second shaft 306 configured to drive the hydraulic device 305, and gear wheels configured to transfer torque between the first shaft 303 and the second shaft 306. The second shaft 306 of the gear 302 is a shaft of a rotating cylinder barrel 318 of the swash plate axial piston pump. In figure 3, the rotating cylinder barrel 318 of the hydraulic device 305 is presented as a partial section view and one of the pistons of the hydraulic device 305 is denoted with a reference 307. In the exemplifying electrohydraulic device illustrated in figure 3, the gear 302 is a speed reduction planetary gear so that the rotational speed of the electric machine 301 is greater than the rotational speed of the hydraulic device 305. The planetary gear comprises a gear ring 309, a sun wheel 310, planet wheels configured to mesh with the gear ring and the sun wheel, and a planet carrier 312 configured to support the planet wheels. The planet carrier 312 is connected to the second shaft 306 of the gear, and the sun wheel 310 is connected to the first shaft 303 of the gear. In figure 3, two of the planet wheels are denoted with references 311a and 311b. In the exemplifying electrohydraulic device illustrated in figure 3, the electric machine 301 is an outer rotor electric machine, and the gear ring 309 of the planetary gear is attached to a stator 313 of the outer rotor electric machine so that the stator 313 surrounds the gear ring 309. The exemplifying electrohydraulic device illustrated in figure 3 comprises a casing 317 configured to contain the electric machine 301, the gear 302, and the hydraulic device 305. The casing 317 is advantageously a hermetic casing.

The specific examples provided in the description given above should not be construed as limiting the scope and/or the applicability of the accompanied claims. Lists and groups of examples provided in the description given above are not exhaustive unless otherwise explicitly stated.

## Claims

1. An electrohydraulic device comprising:
- an electric machine (101, 201, 301),
- a hydraulic device (105, 205, 305), and
- a gear (102, 202, 302) having a first shaft (103, 203, 303) attached to a rotor (104, 204, 304) of the electric machine, a second shaft (106, 206, 306) configured to drive the hydraulic device, and gear wheels configured to transfer torque between the first shaft and the second shaft,
wherein the second shaft of the gear is configured to constitute a rotating part (108, 208, 308) of the hydraulic device, and the gear (102, 302) is a planetary gear having a gear ring (109), a sun wheel (110), planet wheels (111a, 111b) configured to mesh with the gear ring and the sun wheel, and a planet carrier (112) configured to support the planet wheels, the planet carrier being connected to the second shaft of the gear and the sun wheel being connected to the first shaft of the gear, and the electric machine (101, 301) being an outer rotor electric machine, **characterized in that** the gear ring of the planetary gear is attached to a stator (113) of the outer rotor electric machine so that the stator surrounds the gear ring.

2. An electrohydraulic device according to claim 1, wherein the hydraulic device (105, 205) is a bent axis hydraulic pump and the rotating part (108, 208) of the hydraulic device is a drive flange configured to drive pistons (107, 207) of the bent axis hydraulic pump.

3. An electrohydraulic device according to claim 2, wherein the second shaft constituting the drive flange is a single piece of material.

4. An electrohydraulic device according to claim 1, wherein the hydraulic device (305) is a swash plate axial piston pump and the rotating part (308) of the hydraulic device is a shaft of a rotating cylinder barrel (318) of the swash plate axial piston pump.

5. An electrohydraulic device according to any one of claims 1-4, wherein the gear (102, 202, 302) is a speed reduction gear so that rotational speed of the electric machine is greater than rotational speed of the hydraulic device.

6. An electrohydraulic device according to claim 1, wherein an end-plate (114) of the planet carrier and the second shaft constitute a single piece of material.

7. An electrohydraulic device according to any one of claims 1-6, wherein the electric machine is a permanent magnet machine in which the rotor (104) comprises permanent magnets (115).

8. An electrohydraulic device according to any one of claims 1-7, wherein the electric machine (201) is an induction machine in which the rotor (204) comprises a cage winding.

9. An electrohydraulic device according to any one of claims 1-8, wherein a stator (113, 213) of the electric machine comprises a multiphase winding (116, 216) configured to produce a rotating magnetic field when supplied with multiphase alternating electric currents.

10. An electrohydraulic device according to any one of claims 1-9, wherein the electrohydraulic device comprises a casing (117, 217) configured to contain the electric machine, the gear, and the hydraulic device.

11. An electrohydraulic device according to claim 10, wherein the casing is a hermetic casing.

## Patentansprüche

1. Elektrohydraulische Vorrichtung, aufweisend:
- eine elektrische Maschine (101, 201, 301),
- eine hydraulische Vorrichtung (105, 205, 305), und
- ein Getriebe (102, 202, 302) mit einer ersten Welle (103, 203, 303), die an einem Rotor (104, 204, 304) der elektrischen Maschine befestigt ist, und einer zweiten Welle (106, 206, 306), die zum Antreiben der hydraulischen Vorrichtung ausgebildet ist, und Zahnräder, die zum Übertragen von Drehmoment zwischen der ersten Welle und der zweiten Welle ausgebildet sind,
wobei die zweite Welle des Getriebes dazu ausgebildet ist, ein rotierender Teil (108, 208, 308) der hydraulischen Vorrichtung zu bilden, und das Getriebe (102, 302) ein Planetengetriebe ist mit einem Zahnkranz (109), einem Sonnenrad (110), Planetenrädern (111a, 111b), die dazu ausgebildet sind, mit dem Zahnkranz und dem Sonnenrad zu kämmen, und einem Planetenträger (112), der dazu ausgebildet ist, die Planetenräder zu tragen, wobei der Planetenträger mit der zweiten Welle des Getriebes verbunden ist und das Sonnenrad mit der ersten Welle des Getriebes verbunden ist, und die elektrische Maschine (101, 301) eine elektrische Außenläufermaschine ist, **dadurch gekennzeichnet, dass** der Zahnkranz des Planetengetriebes an einem Stator (113) der elektrischen Außenläufermaschine befestigt ist, so dass der Stator den Zahnkranz umschließt.

2. Elektrohydraulische Vorrichtung nach Anspruch 1, wobei die hydraulische Vorrichtung (105, 205) eine hydraulische Schrägachsenpumpe ist und der rotierende Teil (108, 208) der hydraulischen Vorrichtung ein Antriebsflansch ist, der zum Antreiben von Kolben (107, 207) der hydraulischen Schrägachsenpumpe ausgebildet ist.

3. Elektrohydraulische Vorrichtung nach Anspruch 2, wobei die zweite Welle, die den Antriebsflansch bildet, ein einziges Materialstück ist.

4. Elektrohydraulische Vorrichtung nach Anspruch 1, wobei die hydraulische Vorrichtung (305) eine Taumelscheiben-Axialkolbenpumpe ist und der rotierende Teil (308) der hydraulischen Vorrichtung eine Welle eines rotierenden Zylinderrohrs (318) der Taumelscheiben-Axialkolbenpumpe ist.

5. Elektrohydraulische Vorrichtung nach einem der Ansprüche 1-4, wobei das Getriebe (102, 202, 302) ein Untersetzungsgetriebe ist, so dass die Drehzahl der elektrischen Maschine größer ist als die Drehzahl der hydraulischen Vorrichtung.

6. Elektrohydraulische Vorrichtung nach Anspruch 1, wobei eine Endplatte (114) des Planetenträgers und die zweite Welle ein einziges Materialstück bilden.

7. Elektrohydraulische Vorrichtung nach einem der Ansprüche 1-6, wobei die elektrische Maschine eine Permanentmagnetmaschine ist, bei der der Rotor (104) Permanentmagnete (115) aufweist.

8. Elektrohydraulische Vorrichtung nach einem der Ansprüche 1-7, wobei die elektrische Maschine (201) eine Induktionsmaschine ist, bei der der Rotor (204) eine Käfigwicklung aufweist.

9. Elektrohydraulische Vorrichtung nach einem der Ansprüche 1-8, wobei ein Stator (113, 213) der elektrischen Maschine eine mehrphasige Wicklung (116, 216) aufweist, die dazu ausgebildet ist, ein rotierendes Magnetfeld zu erzeugen, wenn sie mit mehrphasigen elektrischen Wechselströmen versorgt wird.

10. Elektrohydraulische Vorrichtung nach einem der Ansprüche 1-9, wobei die elektrohydraulische Vorrichtung ein Gehäuse (117, 217) aufweist, das dazu ausgebildet ist, die elektrische Maschine, das Getriebe und die hydraulische Vorrichtung zu beinhalten.

11. Elektrohydraulische Vorrichtung nach Anspruch 10, wobei das Gehäuse ein hermetisches Gehäuse ist.

## Revendications

1. Dispositif électro-hydraulique comprenant :
- une machine électrique (101, 201, 301),
- un dispositif hydraulique (105, 205, 305), et
- un engrenage (102, 202, 302) ayant un premier arbre (103, 203, 303) fixé à un rotor (104, 204, 304) de la machine électrique, un second arbre (106, 206, 306) configuré pour entraîner le dispositif hydraulique, et des roues d'engrenage configurées pour transférer le couple entre le premier arbre et le second arbre,
dans lequel le second arbre de l'engrenage est configuré pour constituer une partie rotative (108, 208, 308) du dispositif hydraulique, et l'engrenage (102, 302) est un engrenage planétaire ayant une bague d'engrenage (109), une roue solaire (110), des roues planétaires (111a, 111b) configurées pour s'engrener avec la bague d'engrenage et la roue solaire, et un porte-satellites (112) configuré pour supporter les roues planétaires, le porte-satellites étant connecté au second arbre de l'engrenage et la roue solaire étant connectée au premier arbre de l'engrenage, et la machine électrique (101, 301) étant une machine électrique à rotor extérieur, **caractérisé en ce que** la bague d'engrenage de l'engrenage planétaire est fixée à un stator (113) de la machine électrique à rotor extérieur de façon à ce que le stator entoure la bague d'engrenage.

2. Dispositif électro-hydraulique selon la revendication 1, dans lequel le dispositif hydraulique (105, 205) est une pompe hydraulique à axe brisé et la partie rotative (108, 208) du dispositif hydraulique est une bride d'entraînement configurée pour entraîner des pistons (107, 207) de la pompe hydraulique à axe brisé.

3. Dispositif électro-hydraulique selon la revendication 2, dans lequel le second arbre constituant la bride d'entraînement est une seule pièce de matériau.

4. Dispositif électro-hydraulique selon la revendication 1, dans lequel le dispositif hydraulique (305) est une pompe à piston axial à plateau oscillant et la partie rotative (308) du dispositif hydraulique est un arbre d'un corps de vérin rotatif (318) de la pompe à piston axial à plateau oscillant.

5. Dispositif électro-hydraulique selon l'une quelconque des revendications 1-4, dans lequel l'engrenage (102, 202, 302) est un réducteur de vitesses de façon à ce que la vitesse de rotation de la machine électrique soit supérieure à la vitesse de rotation du dispositif hydraulique.

6. Dispositif électro-hydraulique selon la revendication 1, dans lequel un fond de capot (114) du porte-satellites et du second arbre constitue une seule pièce de matériau.

7. Dispositif électro-hydraulique selon l'une quelconque des revendications 1-6, dans lequel la machine électrique est une machine à aimant permanent dans laquelle le rotor (104) comprend des aimants permanents (115).

8. Dispositif électro-hydraulique selon l'une quelconque des revendications 1-7, dans lequel la machine électrique (201) est une machine à induction dans laquelle le rotor (204) comprend un enroulement à cage.

9. Dispositif électro-hydraulique selon l'une quelconque des revendications 1-8, dans lequel un stator (113, 213) de la machine électrique comprend un enroulement multi-phases (116, 216) configuré pour produire un champ magnétique rotatif lorsqu'il reçoit des courants électriques alternatifs multi-phases.

10. Dispositif électro-hydraulique selon l'une quelconque des revendications 1-9, dans lequel le dispositif électro-hydraulique comprend un carter (117, 217) configuré pour contenir la machine électrique, l'engrenage et le dispositif hydraulique.

11. Dispositif électro-hydraulique selon la revendication 10, dans lequel le carter est un carter hermétique.
